# EUROPEAN PATENT APPLICATION

(11) **EP 1 837 152 A1**
(43) Date of publication of application: **26.09.2007**
(21) Application number: 07104095.0
(22) Date of filing: 14.03.2007
(51) Int. Cl.: B29C 45/17, B29C 45/64

(54) **Mold clamping apparatus for injection molding machine**

(30) Priority: 23.03.2006 JP 2006080676
(71) Applicant: Fanuc Ltd, Minamitsuru-gun, Yamanashi 401-0597 (JP)
(72) Inventor: NISHIMURA, Koichi, Yamanashi 410-1115 (JP); NAITO, Yasuo, Yamanashi 401-0511 (JP)
(74) Representative: Billington, Lawrence Emlyn

(57) **Abstract**

A mold clamping apparatus has a mold clamping force transmitting member (8) disposed in a middle part of a mold mounting platen (2) on which a mold (5) is mounted. An abutting member (10) is detachably provided in a spaced area between a peripheral portion of a mold mounting platen (2) and peripheral portion of a mold clamping force transmitting member (8). If this abutting member (10) is retreated from the spaced area so that it does not touch the mold mounting platen (2) or the mold clamping force transmitting member (8), the deflection of the mold clamping force transmitting member (8) due to a mold clamping force is not transmitted to the mold mounting platen (2). On the other hand, if this abutting member (10) is inserted in the spaced area so that it touches the mold mounting platen (2) or the mold clamping force transmitting member (8), the deflection of the mold clamping force transmitting member (8) is transmitted to the mold mounting platen (2). With this arrangement, in this mold clamping apparatus, it is possible to use both a mold that was corrected so as to cope with the occurrence of the deflection of a mold mounting platen (2) and a mold that was not corrected in this way.

## Description

### BACKGROUND OF THE INVENTION

### 1. Field of the Invention

The present invention relates to a mold clamping apparatus for an injection molding machine.

### 2. Description of the Related Art

In a toggle type mold clamping apparatus, a fixed platen and a platen (toggle mechanism mounting platen) to which a toggle mechanism is mounted are connected together on their respective four corners by use of tie bars. And by moving the movable platen in a direction toward the fixed platen along the tie bars by use of the toggle mechanism, a mold (movable side mold) mounted on the movable platen is pressed against a mold (fixed side mold) mounted on the fixed platen. The tie bars become elongated by this pressing and a mold clamping force is given to the molds by the elongation of the tie bars.

For this reason, the force from the tie bars act on the fixed platen at the positions where the tie bars are connected (i.e., peripheral portions of the fixed platen away from the center thereof). The force from the toggle mechanism acts on the movable platen in the areas (i.e., peripheral portions away from the movable platen) where the movable platen engages with the toggle mechanism. On the other hand, because the movable side mold is mounted to a center part of the movable platen and the fixed side mold is mounted to a center part of the fixed platen, the area where the fixed side mold exerts a force on the fixed platen is different from the area where the tie bar exerts a force on the fixed platen, and the area where the movable side mold exerts a force on the movable platen is different from the area where the toggle mechanism exerts a force on the movable platen. As a result, a mold clamping force acts on the fixed platen and movable platen, to each of which a mold is mounted, (these platens are hereafter called "mold mounting platens") and deflection occurs on these mold mounting platens. In order to prevent the occurrence of this deflection, it is necessary that the thickness of the mold mounting platen be increased. However, this results in an increase in the weight of the mold mounting platen, causing a rise in the cost of an injection molding machine.

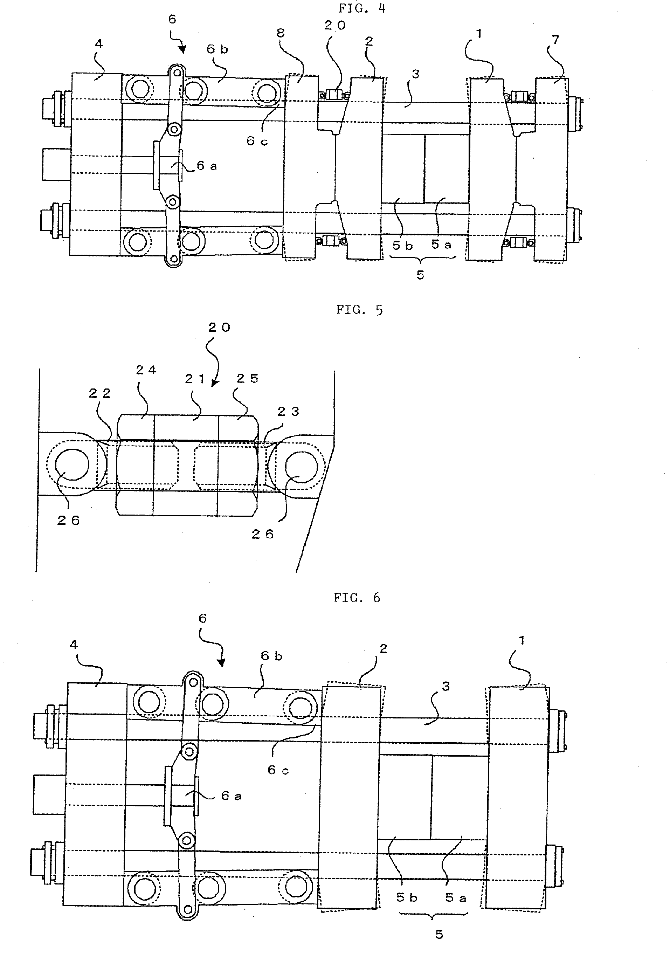

FIG. 6 is a schematic diagram to explain the condition in which deflection occurs in mold mounting platens (a fixed platen and a movable platen) of a conventional toggle type mold clamping apparatus.

A fixed platen 1 and a toggle mechanism mounting platen 4 are connected together on their respective four corners by use of tie bars 3. One end of a toggle mechanism 6 is mounted on the toggle mechanism mounting platen 4 and the other end of the toggle mechanism 6 is mounted on a movable platen 2. Therefore, when a cross head 6a of the toggle mechanism 6 is moved forward by a driving source such as a motor (not shown), the toggle link expands, moves the movable platen 2 along the tie bar 3 and causes a movable side mold 5b mounted on the movable platen 2 to abut against a fixed side mold 5a mounted on the fixed platen 1. When the toggle link is caused to expand further, the tie bar 3 elongates and generates a mold clamping force by the reaction force of this elongation of the tie bar 3.

The points of application of a mold clamping force on the fixed platen 1 generated by the mold clamping apparatus are the positions where the tie bars are mounted. That is, the points of application are in peripheral portions of the fixed platen 1, and not in a center part thereof. In other words, the points of application are at positions outward from the edge of the fixed side mold 5a mounted in the center part of the fixed platen 1. The points of application on the movable platen 2 are the positions where the movable platen 2 is engaged with the toggle mechanism. That is, the points of application are present in peripheral portions (an upper portion and a lower portion) of the movable platen 2, and not in a center part thereof. In other words, the point of application is at a position outward from the edge of the movable side mold 5b mounted to a center part of the movable platen 2.

For this reason, as indicated by broken lines in FIG. 6, deflection occurs in the fixed platen 1 and the movable platen 2 and in the areas near the periphery of the mold 5 (the fixed side mold 5a and the movable side mold 5b), the mold clamping pressure becomes high as compared with the center part of the mold, with the result that the mold clamping force of the movable side mold 5b to the fixed side mold 5a becomes nonuniform.

Therefore, in order to correct such worsening of the accuracy of molded articles due to the nonuniformity of the mold clamping pressure within the mold face, particularly in case of molding precise molded articles, corrections such as correcting the cavity shape to adapt to the nonuniformity of the mold clamping pressure or intentionally lowering the flatness of the mold face have hitherto been made in the fabrication of molds.

On the other hand, there has been known a mold clamping mechanism wherein a tapered member is provided, as a mold clamping force transmitting member, to each of a fixed platen and a movable platen so that mold clamping force is transmitted to the center parts of the fixed platen and the movable platen, thereby allowing a mold clamping force, acting on the fixed platen at the area where the tie bars are mounted, to be transmitted only to the middle part of the fixed platen via the mold clamping force transmitting member, and also allowing a mold clamping force, acting on the movable platen at the area where the movable platen is engaged with one end of a toggle mechanism, to be transmitted only to the middle part of the movable platen via the mold clamping force transmitting member, whereby the deflection of the fixed platen and movable platen is prevented (refer to Japanese Patent Application Laid-Open No. 8-258103).

Similarly, there has also been known a technique in which a mold clamping mechanism is provided with a load receiving connection member that transmits a force from a toggle type mold clamping mechanism to a movable platen and this load receiving connection member is connected to a movable platen at a position nearer to the center of the movable platen than a portion where a force from the toggle type mold clamping mechanism is received, whereby the deflection of the movable platen is prevented (refer to Japanese Patent Application Laid-Open No. 2003-89133).

By using the above-described inventions described in Japanese Patent Application Laid-Open No. 8-258103 and Japanese Patent Application Laid-Open No. 2003-89133, it is possible to substantially improve the nonuniformity of the stress within the mold face and it is possible to cause a uniform mold clamping pressure to be generated on the whole mold face (the surface of the fixed side mold and the surface of the movable side mold which faces the surface of the fixed side mold).

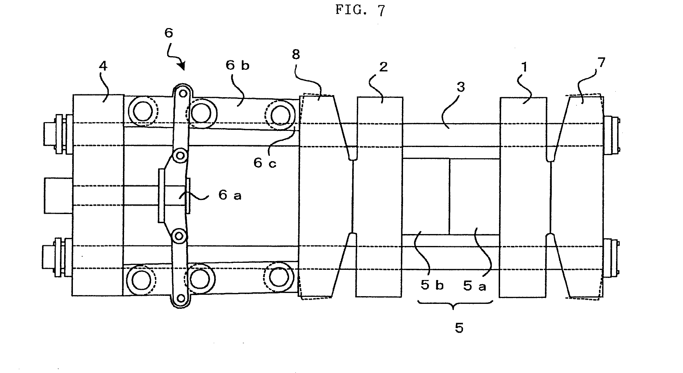

FIG. 7 is a diagram that schematically shows a mold clamping apparatus provided with a mold clamping force transmitting member that transmits a mold clamping force to the middle part of a mold mounting platen, which is described in Japanese Patent Application Laid-Open No. 8-258103 and Japanese Patent Application Laid-Open No. 2003-89133.

A toggle mechanism mounting platen 4 and a mold clamping force transmitting member 7 are connected to each other on their respective four corners by use of tie bars 3. The mold clamping force transmitting member 7 has a protruding leading edge in the shape of a quadrangular truncated pyramid at the middle of one face thereof, which abuts against the middle part of a face of the fixed platen 1 on the side opposite the mold mounting face of the fixed platen. As a result, a mold clamping force generated in the tie bar 3 acts on the fixed platen 1 in the middle part thereof via the middle part of the mold clamping force transmitting member 7.

One end of a toggle mechanism 6 is attached to the toggle mechanism mounting platen 4 and the other end (a ternary link 6b) thereof is rotatably connected to a staple 6c provided in a peripheral portion of a mold claming force transmitting member 8 on the movable platen 2 side. And this mold claming force transmitting member 8 has a tapered shape and a leading end thereof abuts against the middle part of a face of the movable platen 2 on the side opposite the mold mounting face of the movable platen 2. As a result, a mold clamping force from the toggle mechanism 6 acts on a middle part of the movable platen 2 via a middle part of the mold claming force transmitting member 8.

As described above, a reaction force of the mold clamping force from the mold 5 mounted to the middle parts of the fixed platen 1 and movable platen 2 is generated when the mold 5 is clamped. However, because the fixed platen 1 and the movable platen 2 are constructed so that a mold clamping force acts on the middle parts of the fixed platen 1 and movable platen 2 through the mold clamping force transmitting members 7, 8, deflection does not occur in the fixed platen 1 or the movable platen 2 even when deflection occurs in the mold clamping force transmitting members 7, 8 as indicated by broken lines in FIG. 7, as a result, the mold clamping pressure within the mold face can be uniformly maintained. For this reason, in the mold clamping apparatus provided with the mold clamping force transmitting members 7, 8 as in this case, it is unnecessary to fabricate molds by making corrections such as correcting the cavity shape and intentionally lowering the flatness of the mold face.

Incidentally, as a method of eliminating the nonuniformity of the mold clamping pressure caused by fabrication errors of a toggle mechanism, such as working errors in the length of a toggle, assembling errors and the like during the fabrication of toggles of the toggle mechanism, there has also been known a technique in which a hydraulic mechanism is provided in a connection part between a toggle mechanism and a movable platen so as to adjust the pressure acting on the surfaces of the mold (refer to Japanese Patent Application Laid-Open No. 2-215509). However, this technique is aimed at eliminating the nonuniformity of pressure acting on the abutted surfaces of the mold, arising from fabrication errors of the toggle mechanism, not aimed at eliminating the nonuniformity of the mold clamping pressure generated from the deflection of the movable platen.

Also, there has been known a mold clamping apparatus wherein a push bar that presses mold plates in a fixed platen and a movable platen from behind is provided and a pre-deformed amount, estimated in advance by the anticipation of deformation of the fixed platen and the movable platen due to mold clamping force, is given to mold plates (refer to Japanese Utility Model Application Laid-open No. 62-170212).

As described above, in the technique shown in FIG. 7 (Japanese Patent Application Laid-Open No. 8-258103, Japanese Patent Application Laid-Open No. 2003-89133), the deflection of the mold mounting platens (the fixed platen and the movable platen) is prevented by providing the mold clamping force transmitting members in the mold mounting platens so that it is possible to eliminate the nonuniformity of the mold clamping pressure within the mold face that occurs due to this deflection. On the other hand, a mold, which is fabricated for use in a conventional mold clamping apparatus, as shown in FIG. 6, in which mold mounting platens are not provided with a mold clamping force transmitting member, is subjected to shape correction so as to eliminate accuracy defects in molded articles due to the nonuniformity of the mold clamping pressure. Therefore, if this mold is used in a mold clamping apparatus provided with a mold clamping force transmitting member, the situation where the accuracy of molded articles is adversely affected rather than improved will arises.

### SUMMARY OF THE INVENTION

In the mold clamping apparatus for an injection molding machine according to the present invention, a mold clamping force transmitting member which transmits a mold clamping force to a middle part of a mold mounting platen is provided, and a peripheral portion of the mold mounting platen and a peripheral portion of the mold clamping force transmitting member are spaced from each other. This mold clamping apparatus comprises a connection member in a spaced area between the peripheral portion of the mold mounting platen and the peripheral portion of the mold clamping force transmitting member in a manner such that it can be changed from connected state to non-connected state or from non-connected state to connected state. And, the connection member has a portion which abuts against, or connects to, the peripheral portion of the mold mounting platen, on one side thereof, and a portion which abuts against, or connects to, the peripheral portion of the mold clamping force transmitting member, on the other side thereof.

The mold clamping force transmitting member may have a leading end surface having a tapered shape that abuts against the middle part of a face of the mold mounting platen on the side opposite the mold mounting face thereof. The spaced area between the peripheral portion of the mold mounting platen and peripheral portion of the mold clamping force transmitting member may be formed having a tapered section, and the connection member may be a wedge-shaped abutting member and may be constructed so as to be inserted into the spaced area having a tapered section, with one surface thereof abutting against a surface of the peripheral portion of the mold mounting platen and the other surface thereof abutting against a surface of the peripheral portion of the mold clamping force transmitting member.

The mold clamping apparatus may further comprise connected state changeover means that carries out changeover between a state where the mold clamping force transmitting member and the mold mounting platen are connected to each other via the connection member and a state where the mold clamping force transmitting member is not connected to the mold mounting platen with the interposing of the connection member cancelled.

The connected state changeover means carries out changeover between a connected state where when a mold clamping force acts, one side of the connecting member abuts against or connects to the peripheral portion of the mold mounting platen and the other side thereof abuts against or connects to the peripheral portion of the mold clamping force transmitting member and a non-connected state where even when a mold clamping force does or does not act, one side of the connecting member does not abut against or does not connect to the peripheral portion of the mold mounting platen or/and further the other side thereof does not abut against or does not connect to the peripheral portion of the mold clamping force transmitting member.

The mold clamping apparatus may further comprise applied connecting force adjusting means that adjusts an abutting force or a connecting force applied to between the mold mounting platen and the mold clamping force transmitting member by interposing the connection member.

The abutting force or the connecting force adjusted by the applied connecting force adjusting means is a force that is applied to between the mold mounting platen and the mold clamping force transmitting member when a mold clamping force does not act on a mold mounted on the mold mounting platen.

The connection member may comprise connected state maintaining means for maintaining a state of abutment or connection between the mold mounting platen and the mold clamping force transmitting member.

The connected state maintaining means may be adjusted such that transmission of force by the connection member is started when a mold clamping force that acts on a mold mounted on the mold mounting platen has reached a prescribed value. After adjusting of the magnitude of an abutting force or a connecting force applied to between the mold mounting platen and the mold clamping force transmitting member by use of the applied connecting force adjusting means, the connected state maintaining means may maintain a state where the connection means abuts against, or connects to, a connection area so that a force transmitted by the connection member becomes constant regardless of a mold clamping force.

The connection means may be a fluid cylinder, one end of which is connected to the peripheral portion of the mold mounting platen and the other end of which is connected to the peripheral portion of the mold clamping force transmitting member. In this case, a fluid circuit that supplies a fluid to the fluid cylinder can be closed and opened.

The connection means may be a turnbuckle, one end of which is connected to the peripheral portion of the mold mounting platen and the other end of which is connected to the peripheral portion of the mold clamping force transmitting member. In this case, this turnbuckle may be constructed so as to permit disengagement from connection to the peripheral portion of the mold mounting platen or connection to the peripheral portion of the mold clamping force transmitting member.

In the first aspect of the method of mold clamping adjustment of a mold clamping apparatus for an injection molding machine according to the present invention, the mold clamping apparatus comprises a mold clamping force transmitting member which transmits a mold clamping force to a middle part of a mold mounting platen, and a peripheral portion of the mold mounting platen and a peripheral portion of the mold clamping force transmitting member are spaced from each other. Further, the mold clamping apparatus comprises; a connection member in a spaced area between the peripheral portion of the mold mounting platen and the peripheral portion of the mold clamping force transmitting member in a manner such that it can be changed over from connected state to non-connected state or from non-connected state to connected state, and the connection member has a portion which abuts against, or connects to, the peripheral portion of the mold mounting platen, on one side thereof, and a portion which abuts against, or connects to, the peripheral portion of the mold clamping force transmitting member, on the other side thereof; and connected state changeover means that carries out changeover between a state where the mold clamping force transmitting member and the mold mounting platen are connected to each other via the connection member and a state where the mold clamping force transmitting member is not connected to the mold mounting platen with the interposing of the connection member cancelled. And the method of mold clamping adjustment comprises the steps of: mounting a mold to a fixed platen and a movable platen; carrying out molding, with the connection member brought into either of a connected state or a non-connected state; measuring the size and shape of a molded article obtained by the molding; carrying out mass-production molding without changing over the connection/non-connection of the connection member when the size and shape of the measured molded article fall in prescribed ranges; carrying out molding again by changing over the connection/non-connection of the connection member when the size and shape of the measured molded article go out of the prescribed ranges; measuring the size and shape of a molded article obtained by the molding carried out again; and carrying out mass-production molding following the molding performed again without changing over the connection/non-connection of the connection member when the size and shape of the measured molded article fall in prescribed ranges.

In the second aspect of the method of mold clamping adjustment of a mold clamping apparatus for an injection molding machine according to the present invention, the mold clamping apparatus comprises a mold clamping force transmitting member which transmits a mold clamping force to a middle part of a mold mounting platen, and a peripheral portion of the mold mounting platen and a peripheral portion of the mold clamping force transmitting member are spaced from each other. Further, the mold clamping apparatus comprises; a connection member in a spaced area between the peripheral portion of the mold mounting platen and the peripheral portion of the mold clamping force transmitting member in a manner such that it can be changed over from connected state to non-connected state or from non-connected state to connected state, and the connection member has a portion which abuts against, or connects to, the peripheral portion of the mold mounting platen, on one side thereof, and a portion which abuts against, or connects to, the peripheral portion of the mold clamping force transmitting member, on the other side thereof; connected state changeover means that carries out changeover between a state where the mold clamping force transmitting member and the mold mounting platen are connected to each other via the connection member and a state where the mold clamping force transmitting member is not connected to the mold mounting platen with the interposing of the connection member cancelled; applied connecting force adjusting means that adjusts an abutting force or a connecting force applied to between the mold mounting platen and the mold clamping force transmitting member by interposing the connection member. And the connection member comprises connected state maintaining means for maintaining a state of abutment or connection between the mold mounting platen and the mold clamping force transmitting member. And the method of mold clamping adjustment including the steps of: mounting a mold to a fixed platen and a movable platen; carrying out injection molding by use of the mold; measuring the size and shape of a molded article obtained by the injection molding; carrying out mass-production molding when the size and shape of the measured molded article fall in prescribed ranges; changing over a connected/non-connected state by use of the connected state changeover means or adjusting an abutting force or a connecting force applied to between the mold mounting platen and the mold clamping force transmitting member by use of the applied connecting force adjusting means according to differences between the size and shape of the molded article and target values thereof when the size or shape of the measured molded particle goes out of a prescribed range; and carrying out injection molding again, with the condition of abutment or connection between the mold mounting platen and the mold clamping force transmitting member maintained by use of the connected state maintaining means.

According to the present invention, both a mold that has been subjected to correction so as to prevent the accuracy defect of a molded article that occurs due to the nonuniformity of a mold clamping pressure within the mold face caused by the deflection of a mold mounting platen by a mold clamping force and a mold that has not been subjected to such a correction can be used in the same mold clamping apparatus and a desired molded article accuracy is obtained by using either of the two types of molds.

### BRIEF DESCRIPTION OF THE DRAWINGS

The forgoing and other objects and feature of the invention will be apparent from the following description of preferred embodiments of the invention with reference to the accompanying drawings, in which:
FIG. 1 is a schematic diagram of the first embodiment of a mold clamping apparatus of the present invention;
FIG. 2 is a schematic diagram of the second embodiment of a mold clamping apparatus of the present invention;
FIG. 3 is a schematic diagram of the third embodiment of a mold clamping apparatus of the present invention;
FIG. 4 is a schematic diagram of the fourth embodiment of a mold clamping apparatus of the present invention;
FIG. 5 is an enlarged view of a connecting member that constitutes the mold clamping apparatus shown in FIG. 4;
FIG. 6 is a schematic diagram of a conventional mold clamping apparatus; and
FIG. 7 is a schematic diagram of a mold clamping apparatus having a conventional mold clamping force transmitting member.

### DETAILED DESCRIPTION OF THE PREFERRED EMBODIMENTS

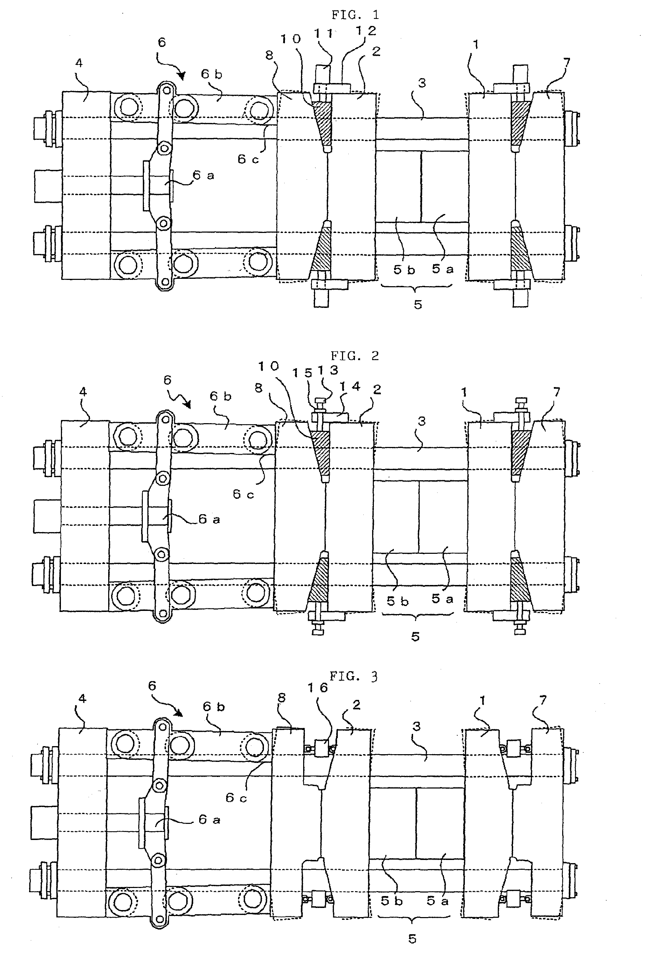

First, the first embodiment of a mold clamping apparatus in the present invention will be described by using a schematic diagram of FIG. 1.

This embodiment is a mold clamping apparatus provided with a mold clamping force transmitting member that transmits a mold clamping force to mold mounting platen (a fixed platen and a movable platen) and differs from a conventional example shown in FIG. 7 in that the mold clamping apparatus is provided with an abutting member 10, a cylinder 11 and a cylinder mounting member 12.

Mold clamping force transmitting members 7 and 8 are disposed respectively so as to face a fixed platen 1 and a movable platen 2 which are mold mounting platens. These mold clamping force transmitting members 7, 8 are formed in a tapered shape of a quadrangular truncated pyramid, whereby the mold clamping force transmitting members 7, 8 have function of transmitting a force acting on a peripheral portion of the mold clamping force transmitting members to a middle part of the mold mounting platens.

The mold clamping force transmitting member 7 on the fixed platen 1 side and a toggle mechanism mounting platen 4 are connected to each other by the tie bar 3 at their respective four corners, and in this state, a middle part of the mold clamping force transmitting member 7, having the shape of a quadrangular truncated pyramid, abuts against the middle part of a face of the fixed platen 1 on the side opposite the mold mounting face of the fixed platen 1. A ternary link 6b of a toggle mechanism 6 provided on the toggle mechanism mounting platen 4 is rotatably connected to a staple 6c provided in a peripheral portion of the mold clamping force transmitting member 8 on the movable platen 2 side. Therefore, a mold clamping force from the toggle mechanism 6 acts on a staple 6c mounting position on the mold clamping force transmitting member 8. This force acting on the mold clamping force transmitting member 8 acts on a middle part of the movable platen 2 via a middle part of the mold clamping force transmitting member 8 because a tapered leading end of the mold clamping force transmitting member 8 abuts against the middle part of a face of the movable platen 2 on the side opposite the mold mounting face of the movable platen 2

When a cross head 6a of the toggle mechanism 6 is moved forward by use of a driving source such as a motor (not shown), the toggle link expands, moves the mold clamping force transmitting member 8 and the movable platen 2 along the tie bar 3, thereby causing a movable side mold 5b mounted on the movable platen 2 to abut against a fixed side mold 5a mounted on the fixed platen 1. When the toggle link is caused to expand further, the tie bar 3 elongates and generates a mold clamping force by the reaction force of this elongation of the tie bar 3.

The construction described above does not differ from that of a mold clamping apparatus having conventional mold clamping force transmitting members 7, 8 shown in Japanese Patent Application Laid-Open No. 8-258103 and FIG. 7.

In this first embodiment, a peripheral portion of the mold mounting platen and a peripheral portion of the mold clamping force transmitting member are spaced from each other and, between these peripheral portions, a space (a spaced area) having a tapered section is formed. And the wedge-shaped abutting member 10 as a connection member is inserted into this tapered spaced area and engaged thereto.

This abutting member 10 has such a shape that one surface thereof abuts against the mold mounting platens (the fixed platen 1, the movable platen 2) and the other surface thereof abuts against the tapered mold clamping force transmitting members 7, 8. And a cylinder mounting member 12 is provided in each of the mold mounting platens (the fixed platen 1, the movable platen 2), and the abutting member 10 is connected to a piston rod of a cylinder 11 mounted to this cylinder mounting member 12.

When the wedge-shaped abutting member 10 is pressed into the tapered spaced area of the mold mounting platens (the fixed platen 1, the movable platen 2) and the mold clamping force transmitting members 7, 8 by driving the cylinder 11 by use of an hydraulic circuit or a pneumatic circuit (not shown), thereby causing the piston rod to protrude, the abutting member 10 abuts against the mold mounting platens (the fixed platen 1, the movable platen 2) and the mold clamping force transmitting members 7, 8, whereby the mold mounting platens (the fixed platen 1, the movable platen 2) and the mold clamping force transmitting members 7, 8 are connected to each other so that the fixed platen 1 and the mold clamping force transmitting members 7 and also the movable platen 2 and the mold clamping force transmitting members 8 become a substantially integrated structure, respectively. On the other hand, when the piston rod is withdrawn, the abutment of the abutting member 10 against at least one of the mold mounting platens (the fixed platen 1, the movable platen 2) and the mold clamping force transmitting members 7, 8 is canceled and a gap is generated between them, with the result that the mold mounting platens (the fixed platen 1, the movable platen 2) come to a condition in which they are not connected to the mold clamping force transmitting members 7, 8.

In this embodiment, the cylinder 11 and a hydraulic circuit or a pneumatic circuit (not shown) constitute connection/non-connection changeover means that changes over the state between the mold mounting platens (the fixed platen 1, the movable platen 2) and the mold clamping force transmitting members 7, 8 to a connected or non-connected state by use of the abutting member 10, applied connecting force adjusting means that adjusts an abutting force to be applied, and abutting state maintaining means.

In bringing the mold mounting platens (the fixed platen 1, the movable platen 2) and the mold clamping force transmitting members 7, 8 into a connected state, the wedge-shaped abutting member 10 is pressed into the gap between the mold mounting platens and the mold clamping force transmitting members 7, 8 by use of the cylinder 11, whereas in bringing the mold mounting platens (the fixed platen 1, the movable platen 2) and the mold clamping force transmitting members 7, 8 into a non-connected state, the wedge-shaped abutting member 10 is withdrawn by the cylinder 11.

The adjustment of the magnitude of an abutting force to be applied is performed by adjusting a hydraulic pressure or a pneumatic pressure to be applied to the cylinder 11, with a mold clamping force not acting on the gap between the movable side mold 5a and the fixed side mold 5b. By closing the hydraulic circuit or pneumatic circuit annexed to the cylinder 11 and trapping the oil or the air in the cylinder 11 after the adjustment of the magnitude of an abutting force to be applied, it is possible to maintain a connected state of the mold mounting platens (the fixed platen 1, the movable platen 2) and the mold clamping force transmitting members 7, 8. When a piston lock mechanism is annexed to the cylinder 11, it is also possible to maintain a connected state by making the piston lock mechanism effective.

In the case of this first embodiment, the fact that the connected state of the mold mounting platens and the mold clamping force transmitting members is maintained means that the wedge-shaped abutting member 10 is inserted into the tapered space (spaced area) formed between the mold mounting platens and the mold clamping force transmitting members and that an abutting position on both of the mold mounting platens and the mold clamping force transmitting members where the wedge shaped abutting members 10 abutting thereon is maintained.

An abutting force to be applied refers to forces that act on each other between the abutting member 10 and the mold mounting platens (the fixed platen 1, the movable platen 2) and between the abutting member 10 and the mold clamping force transmitting members 7, 8 at the point in time of contact of the movable side mold 5b with the fixed side mold 5a (i.e., at the point in time of mold touch).

When a mold that was fabricated for exclusive use in a mold clamping apparatus of a type as shown in FIG. 6 is used, that is, when a mold that is fabricated so as to correct worsening of the accuracy of a molded article due to the nonuniformity of a mold clamping pressure within the mold face that is generated by the deflection of the mold mounting platens (the fixed platen 1, the movable platen 2) due to a mold clamping force, is used in the mold clamping apparatus of FIG. 1, the magnitude of the hydraulic pressure or pneumatic pressure applied to the cylinder 11 is adjusted and a prescribed abutting force is applied to the abutting member 10, whereby the mold mounting platens (the fixed platen 1, the movable platen 2) and the mold clamping force transmitting members 7, 8 are maintained in a close contact condition through the abutting member 10.

The toggle mechanism is driven, the mold clamping force transmitting member 8 and the movable platen 2 move forward in an integrated manner (i.e., move toward the fixed platen 1 side), and the movable side mold 5b mounted on the movable platen 2 abuts against the fixed side mold 5a mounted on the fixed platen 1, and then mold clamping process proceeds. As mold clamping process proceeds and a mold clamping force increases, the mold clamping force transmitting members 7, 8 deflect as indicated by broken lines in FIG. 1. If the abutting position of the abutting member 10 against the mold mounting platens does not change, deflection having a magnitude corresponding to the deflection of the mold clamping force transmitting members 7, 8 occurs in the mold mounting platens (the fixed platen 1, the movable platen 2).

As a result, when a mold which was corrected so that it can obtain a prescribed accuracy of a molded article even when the mold mounting platens deflect is used in the mold clamping apparatus of FIG. 1 (that is, when a mold fabricated for exclusive use in a mold clamping apparatus of the type as shown in FIG. 6 is used), the mold mounting platens (the fixed platen 1, the movable platen 2) and the mold clamping force transmitting members 7, 8 are brought into a connected state. Then, even when the mold mounting platens (the fixed platen 1, the movable platen 2) deflect due to a mold clamping force, it is possible to obtain a molded article of a prescribed accuracy because a mold designed in consideration of the deflection of the mold mounting platens is used.

On the other hand, when a mold, fabricated for ordinal use in a mold clamping apparatus of the type as shown in FIG. 7, is used in the mold clamping apparatus of FIG. 1 (in other words, when a mold, for which it is unnecessary to consider the deflection of the mold mounting platens because the mold clamping apparatus has the mold clamping force transmitting members 7, 8, is used in the mold clamping apparatus of FIG. 1), the abutting member 10 is extracted by use of the cylinder 11 from the gap between the mold mounting platens (the fixed platen 1, the movable platen 2) and the mold clamping force transmitting members 7, 8 and the mold mounting platens and the mold clamping force transmitting members are brought into a non-connected state. As a result, even when the mold clamping force transmitting members 7, 8 deflect due to a mold clamping force, this deflection is not transmitted to the mold mounting platens (the fixed platen 1, the movable platen 2). Therefore, a mold clamping force is generated in the mold 5 without deflection of the mold mounting platens.

Incidentally, the position of the abutting member 10 may also be adjusted so that the abutting member 10 does not abut against the mold mounting platens (the fixed platen 1, the movable platen 2) and the mold clamping force transmitting members 7, 8 until mold clamping process has proceeded and mold clamping force has increased to a certain degree. Also, the hydraulic circuit or pneumatic circuit of the cylinder 11 may be designed to operate when a mold clamping force caused by the toggle mechanism has reached a prescribed value, allowing the wedge-shaped abutting member 10 to enter the tapered spaced area of the mold clamping force transmitting members 7, 8 and the mold mounting platens (the fixed platen 1, the movable platen 2) and the mold clamping force transmitting members 7, 8 and the mold mounting platens (the fixed platen 1, the movable platen 2) to be connected to each other via the abutting member. As means for determined that a mold clamping force caused by the toggle mechanism has reached a prescribed value, a mold clamping force sensor may be provided so that values detected by the sensor are used for the determination. Alternatively, a mold clamping force may be converted into the cross head position so that it is judged that a mold clamping force has reached a prescribed value when the cross head has reached a prescribed position.

The second embodiment of a mold clamping apparatus in the present invention will be described by using a schematic diagram of FIG. 2.

Although the cylinder 11 is used in the mold clamping apparatus of the first embodiment shown in FIG. 1, the second embodiment shown in FIG. 2 differs from the first embodiment in that a bolt 13 is used in place of the cylinder. The shape of an abutting member 10 is the same as in the first embodiment.

A bolt attachment member 14, which has a bolt hole into which a bolt 13 is screwed, is attached to mold mounting platens (a fixed platen 1, a movable platen 2). An abutting member 10 is fixed to a leading end of the bolt 13 that is screwed into the bolt hole of this bolt attachment member 14. This abutting member 10 is inserted into a space having a tapered section (a spaced area) that is formed between peripheral portions of the mold mounting platens (the fixed platen 1, the movable platen 2) and peripheral portions of mold clamping force transmitting members 7, 8, and engaged to this space. The height of the bolt 13 relative to the bolt attachment member 14 is adjusted by turning the bolt 13, whereby the position of the abutting member 10 in the tapered spaced area can be adjusted. The reference numeral 15 denotes a lock nut, which is used to fix the height of the bolt 13 relative to the bolt attachment member 14.

When a mold fabricated on the assumption that deflection does not occur due to a mold clamping force in the mold mounting platens is used in a mold clamping apparatus of this embodiment, a sufficient gap is provided between the abutting member 10 and at least of one of the mold mounting platens (the fixed platen 1, the movable platen 2) or the mold clamping force transmitting members 7, 8. In other words, the gap between the mold mounting platens (the fixed platen 1, the movable platen 2) and the mold clamping force transmitting members 7, 8 is brought into a non-connected state. With this, even when the mold clamping force transmitting members 7, 8 deflect due to a mold clamping force, this deflection is not transmitted to the mold mounting platens (the fixed platen 1, the movable platen 2) and the mold mounting platens do not deflect. Therefore, it is possible to perform high-accuracy molding by using the above-described mold which was fabricated on the assumption that deflection does not occur in the mold mounting platens.

On the other hand, when a mold, fabricated by anticipating that the mold clamping pressure within the mold face becomes nonuniform because of the deflection of the mold mounting platens due to a mold clamping force, is used, the height of the bolt 13 is adjusted in advance by turning the bolt 13 and adjustment is made beforehand so that the abutting member 10 abuts against the mold mounting platens (the fixed platen 1, the movable platen 2) and the mold clamping force transmitting members 7, 8 with a prescribed abutting force that is applied.

When in this manner the mold mounting platens (the fixed platen 1, the movable platen 2) and the mold clamping force transmitting members 7, 8 are brought into a connected state via the abutting member 10 and thereafter a mold clamping force is caused to continue increasing, the mold clamping force transmitting members 7, 8 deflect as indicated by broken lines in FIG. 2. The deflection of the mold clamping force transmitting members 7, 8 is transmitted to the mold mounting platens (the fixed platen 1, the movable platen 2) via the abutting member 10, and the mold mounting platens deflect by an amount corresponding to the amount of the deflection of the mold clamping force transmitting members 7, 8. As a result, even when the mold mounting platens (the fixed platen 1, the movable platen 2) deflects due to a mold clamping force, a molded article having a prescribed accuracy is obtained because a mold designed in consideration of the deflection of the mold mounting platens is used.

Incidentally, the position of the abutting member 10 may also be adjusted so that the abutting member 10 does not abut against the mold mounting platens (the fixed platen 1, the movable platen 2) and the mold clamping force transmitting members 7, 8 until mold clamping process has proceeded and mold clamping force has increased to a certain degree.

Incidentally, in this second embodiment, connected/non-connected state changeover means and applied abutting force adjusting means are constituted by the bolt 13 and abutting state maintaining means is constituted by the lock nut 15.

In the above-described first and second embodiments, the gap between the peripheral portions of the mold mounting platens and the peripheral portions of the mold clamping force transmitting members 7, 8 is a spaced area having a tapered section, and the wedge-shaped abutting member 10 (the connection member) is inserted into this spaced area. And depending on whether or not this abutting member 10 is caused to abut against the mold mounting platens (the fixed platen 1, the movable platen 2) and the mold clamping force transmitting members 7, 8 (that is, whether mold mounting platens and the mold clamping force transmitting members are brought into a connected state or a non-connected state via the abutting member 10), selection can be made by the operation of the cylinder 11 or the bolt 13 as to whether or not the deflection of the mold clamping force transmitting members 7, 8 due to a mold clamping force is transmitted to the mold mounting platens (the fixed platen 1, the movable platen 2).

As a simple example in which the connection member that brings the mold mounting platens and the mold clamping force transmitting members into a connected state by this wedge-shaped abutting member 10, the wedge-shaped abutting member 10 may be constructed so as to be attachable and detachable. For example, a flanged portion is provided in a top portion of the wedge-shaped abutting member 10, the wedge-shaped portion of the abutting member 10 is inserted into the tapered spaced area in the peripheral portions of the mold mounting platen and mold clamping force transmitting members, the wedge-shaped portion of the abutting member 10 is brought into a close-bonded state with the mold mounting platen and the mold clamping force transmitting member so that they are connected to each other, and the flanged portion of the wedge-shaped abutting member 10 is firmly fixed to the mold mounting platen by use of a bolt and the like to ensure that the deflection of the mold clamping force transmitting members due to a mold clamping force is transmitted to the mold mounting platens. In ensuring that the deflection of the mold clamping force transmitting members due to a mold clamping force is not transmitted to the mold mounting platens, it is necessary only that this wedge-shaped abutting member 10 be detached from the mold mounting platens.

In the above-described example, the above-described connected/non-connected state changeover means is not provided and a changeover by manual work is performed. The above-described abutting state maintaining means is constituted by a fixing jig, such as a bolt to be attached to the mold mounting platen in the flanged portion of the abutting member 10. In attaching the flanged portion of the abutting member 10 to the mold mounting platen, an abutting force to be applied may be adjusted by interposing a shim or the like between the flanged portion of the abutting member 10 and the mold mounting platen and changing the degree of the insertion of the wedge-shaped portion of the abutting member into the tapered spaced area between the mold mounting platen and the mold clamping force transmitting member.

Each of the above-described embodiments is applied to a mold clamping apparatus in which the peripheral portion of the mold mounting platen and the peripheral portion of the mold clamping force transmitting member are spaced from each other and a space having a tapered section (a spaced area) is formed between the two peripheral portions. Next, by using a schematic diagram of FIG. 3, a description will be given of the third embodiment of a mold clamping apparatus of the present invention that can be applied also to a mold clamping apparatus in which a space having a tapered section is not formed between the mold mounting platen and the mold clamping force transmitting member.

As shown in FIG. 3, a mold clamping apparatus in this embodiment is provided with mold clamping force transmitting members 7, 8 that transmit a mold clamping force to middle parts of mold mounting platens (a fixed platen 1, a movable platen 2). Peripheral portions of the mold mounting platens (a fixed platen 1, a movable platen 2) and peripheral portions of the mold clamping force transmitting members 7, 8 are spaced from each other and a cylinder 16 (a hydraulic cylinder or a pneumatic cylinder) as a connecting member is provided in the spaced area. One end of the cylinder 16 is attached to the peripheral portions of the mold mounting platens (a fixed platen 1, a movable platen 2) and the other end thereof is attached to the peripheral portions of the mold clamping force transmitting members 7, 8. The generation direction of a hydraulic force or a pneumatic force of the cylinder 16 coincides substantially with the operation direction of the movable-mold mounting platen. In this case, connected/non-connected state changeover means, applied connecting force adjusting means and connecting state maintaining means are constituted by the cylinder 16 (shown) and a hydraulic circuit or a pneumatic circuit (not shown).

In bringing the mold mounting platen and the mold clamping force transmitting member into a connected state, a hydraulic force or a pneumatic force is applied in the direction in which the spaced area between these mold mounting platen and the mold clamping force transmitting member is widened. On the other hand, in bringing the mold mounting platen and the mold clamping force transmitting member into a non-connected state, a hydraulic port or a pneumatic port of the cylinder 16 is opened. The adjustment of a connecting force applied to between the mold mounting platen and the mold clamping force transmitting member is made by adjusting the hydraulic pressure or pneumatic pressure applied to the cylinder 16, under the condition where a mold clamping force does not act on the mold.

After an applied connecting force is adjusted in this way, a hydraulic circuit or a pneumatic circuit annexed to the cylinder 16 is closed and the oil or the air is confined in the cylinder 16, whereby the connected state between the mold mounting platen and the mold clamping force transmitting member is maintained. Then, deflection in an amount corresponding to the amount of deflection of the mold clamping force transmitting members 7, 8 occurs in the mold mounting platens (the fixed platen 1, the movable platen 2). When a piston lock mechanism is annexed to the cylinder 16, it is also possible to maintain a similar connected state by making the piston lock mechanism effective.

By keeping the hydraulic pressure or pneumatic pressure given to the cylinder 16 at a constant level after the adjustment of a connecting force to be applied, it is possible to maintain another connected state different from the above-described connected state. More specifically, it is possible to maintain a connected state where the deflection of the mold mounting platens (the fixed platen 1, the movable platen 2) is kept at a constant level, regardless of the magnitude of the deflection of the mold clamping force transmitting members 7, 8.

The fourth embodiment of a mold clamping apparatus in the present invention will be described by using a schematic diagram of FIG. 4.

Although the cylinder 16 is used in the mold clamping apparatus of the third embodiment shown in FIG. 3, the fourth embodiment shown in FIG. 4 differs from the third embodiment in that connection means using screws is used in place of the cylinder. The mold clamping apparatus of this embodiment is not provided with connected/unconnected state changeover means.

FIG. 5 is an enlarged view of connection means in the fourth embodiment. This connection means is a turnbuckle 20, and two kinds of female screw parts are provided in a nut 21 of the turnbuckle 20. For example, when a male screw 22 is a right-handed screw, a left-handed screw is used as a male screw 23 and correspondingly, a right-handed female screw is used as the female screw part of the nut 21 on the left side of FIG. 5, while a left-handed female screw is used as the female screw part on the right side.

The adjustment of a connecting force applied to between the mold mounting platen and the mold clamping force transmitting member by use of the turnbuckle 20 is made by manually turning the nut 21, under the condition where a mold clamping force does not act on the mold. Connecting state maintaining means is a lock nut 24 and a lock nut 25.

When the mold clamping force transmitting members 7, 8 deflect due to a mold clamping force, this deflection is transmitted to the mold mounting platens (the fixed platen 1, the movable platen 2) via the nut 21 and the male screws 22 and 23, thereby the mold mounting platens deflect. In this fourth embodiment, as described above, there is no means that changes over a connected/non-connected state between the mold mounting platens (the fixed platen 1, the movable platen 2) and the mold clamping force transmitting members 7, 8. Therefore, in order to cancel a connected state, one of the pins 26 that connect the male screw 22 and the mold clamping force transmitting members 7, 8 or the pins 26 that connect the male screw 23 and the mold mounting platens (the fixed platen 1, the movable platen 2) is detachably/attachably designed, and this pin 26 is removed.

In all of the above-described first to fourth embodiments, an abutting force or a connecting force applied to between the mold mounting platen and the mold clamping force transmitting member can be adjusted by use of the above-described adjusting means of an abutting force or a connecting force applied even when a mold clamping force is applied to the mold. For example, when a mold claming force necessary for injection has been generated after the completion of mold clamping, it is possible to adjust a hydraulic pressure or a pneumatic pressure while measuring the amount of deformation of the mold mounting platen or to make adjustment by turning the bolt 13 and the nut 21 so that a desired amount of deformation can be obtained.

When a mold is mounted and injection is performed in a injection molding machine provided with a mold clamping apparatus of each of the above-described embodiments, in a case where it is known beforehand that the mold to be used is a mold corrected to cope with the deflection of the mold mounting platens (the fixed platen 1, the movable platen 2), i.e., a mold corrected so that a prescribed accuracy of a molded article is obtained even when the mold mounting platens (the fixed platen 1, the movable platen 2) deflect due to a mold clamping force, the mold mounting platens (the fixed platen 1, the movable platen 2) and the mold clamping force transmitting members 7, 8 are brought into a connected state by use of the connection member so that the deflection of the mold clamping force transmitting members 7, 8 is transmitted to the mold mounting platens (the fixed platen 1, the movable platen 2).

In a case where it is known beforehand that the mold to be used is not a mold corrected to cope with the deflection of the mold mounting platens (the fixed platen 1, the movable platen 2), the connection between the mold mounting platens (the fixed platen 1, the movable platen 2) and the mold clamping force transmitting members 7, 8 is canceled by operating the connection means.

Furthermore, in a case where it is unknown whether the mold to be used is a mold fabricated by making corrections to cope with the deflection of the mold mounting platens or a mold fabricated without making corrections, first, the mold is mounted on the fixed platen and the movable platen and molding is performed, with the connection member brought into either a "non-connected state" or a "connected state." And the size and shape of a molded article obtained by the molding are measured. As a result, when it can be ascertained that the size and shape of the molded article fall in prescribed ranges, mass-production molding is performed under the condition (non-connected state or connected state) of the connection member where the aforementioned molded article was molded.

On the other hand, when it has become evident that the size or shape of the molded article goes out of the prescribed range, molding is performed again, with the connection member changed over from a "non-connected state" to a "connected state" or from a "connected state" to a "non-connected state." And when as a result of the measurement of the size and shape of a molded article obtained by the molding, it has become evident that the size and shape of the molded article fall in the prescribed ranges, mass-production molding is performed under the condition (connected state or non-connected state) of the connection member where the aforementioned molded article was molded.

Or alternatively, injection mold is performed, with a mold mounted on the fixed platen and the movable platen, and the size and shape of a molded article obtained by the injection molding are measured. As a result, when it becomes evident that the size and shape of the molded article fall in the prescribed ranges, mass-production molding is performed under the above conditions of the injection molding. On the other hand, when it becomes evident that the size or shape of the molded article goes out of the prescribed range, then the connection condition of the mold mounting platens (the fixed platen 1, the movable platen 2) and the mold clamping force transmitting members 7, 8 is changed over from a connected state to a non-connected state or from a non-connected state to a connected state, or a connecting force to be applied is adjusted according to differences between the size and shape of the injected article and target values thereof, and thereafter injection molding is performed again. Until it can be ascertained that the size and shape of the molded article have entered the prescribed ranges, this changeover operation of a connected/non-connected state and/or the adjustment operation of a connecting force to be applied is repeatedly performed.

Incidentally, all of the above-described embodiments related to a toggle type mold clamping mechanism. In a direct pressure type mold clamping mechanism, as a force of the mold clamping mechanism is applied to the middle part of a movable platen of the mold clamping mechanism, there are few cases where deflection occurs in the movable platen. On the fixed platen side, however, as a force from tie bars is applied to peripheral portions of the fixed platen, the fixed platen may sometimes deflect. Therefore, also in a such a direct pressure type mold clamping mechanism, by providing a connection member as described above between a mold mounting platen (a fixed platen) and a mold clamping force transmitting member, it is possible to use a mold fabricated to cope with the deflection of the mold mounting platens and also use a mold fabricated not to cope with the deflection of the mold mounting platens.

## Claims

1. A mold clamping apparatus for an injection molding machine, in which a mold clamping force transmitting member which transmits a mold clamping force to a middle part of a mold mounting platen is provided and a peripheral portion of the mold mounting platen and a peripheral portion of the mold clamping force transmitting member are spaced from each other, wherein
a connection member is provided in a spaced area between the peripheral portion of the mold mounting platen and the peripheral portion of the mold clamping force transmitting member in a manner such that it can be changed from connected state to non-connected state or from non-connected state to connected state; and
said connection member has a portion which abuts against, or connects to, the peripheral portion of the mold mounting platen, on one side thereof, and a portion which abuts against, or connects to, the peripheral portion of the mold clamping force transmitting member, on the other side thereof.

2. The mold clamping apparatus according to claim 1, wherein the mold clamping force transmitting member has a leading end surface having a tapered shape that abuts against the middle part of a face of the mold mounting platen on the side opposite the mold mounting face thereof.

3. The mold clamping apparatus according to claim 2, wherein the spaced area between the peripheral portion of the mold mounting platen and peripheral portion of the mold clamping force transmitting member is formed having a tapered section, and
the connection member is a wedge-shaped abutting member and is constructed so as to be inserted into the spaced area having a tapered section, with one surface thereof abutting against a surface of the peripheral portion of the mold mounting platen and the other surface thereof abutting against a surface of the peripheral portion of the mold clamping force transmitting member.

4. The mold clamping apparatus according to claim 1 or 3, further comprising connected state changeover means that carries out changeover between a state where the mold clamping force transmitting member and the mold mounting platen are connected to each other via the connection member and a state where the mold clamping force transmitting member is not connected to the mold mounting platen with the interposing of the connection member cancelled.

5. The mold clamping apparatus according to claim 4, wherein the connected state changeover means carries out changeover between a connected state where when a mold clamping force acts, one side of the connecting member abuts against or connects to the peripheral portion of the mold mounting platen and the other side thereof abuts against or connects to the peripheral portion of the mold clamping force transmitting member and a non-connected state where even when a mold clamping force does or does not act, one side of the connecting member does not abut against or does not connect to the peripheral portion of the mold mounting platen or/and further the other side thereof does not abut against or does not connect to the peripheral portion of the mold clamping force transmitting member.

6. The mold clamping apparatus according to claim 1, further comprising applied connecting force adjusting means that adjusts an abutting force or a connecting force applied to between the mold mounting platen and the mold clamping force transmitting member by interposing the connection member.

7. The mold clamping apparatus according to claim 6, wherein the abutting force or the connecting force adjusted by the applied connecting force adjusting means is a force that is applied to between the mold mounting platen and the mold clamping force transmitting member when a mold clamping force does not act on a mold mounted on the mold mounting platen.

8. The mold clamping apparatus according to claim 1 or 6, wherein the connection member comprises connected state maintaining means for maintaining a state of abutment or connection between the mold mounting platen and the mold clamping force transmitting member.

9. The mold clamping apparatus according to claim 8, wherein the connected state maintaining means is adjusted such that transmission of force by the connection member is started when a mold clamping force that acts on a mold mounted on the mold mounting platen has reached a prescribed value.

10. The mold clamping apparatus according to claim 8, wherein, after adjusting of the magnitude of an abutting force or a connecting force applied to between the mold mounting platen and the mold clamping force transmitting member by use of the applied connecting force adjusting means, the connected state maintaining means maintains a state where the connection means abuts against, or connects to, a connection area so that a force transmitted by the connection member becomes constant regardless of a mold clamping force.

11. The mold clamping apparatus according to claim 1, wherein the connection means is a fluid cylinder, one end of which is connected to the peripheral portion of the mold mounting platen and the other end of which is connected to the peripheral portion of the mold clamping force transmitting member, and a fluid circuit that supplies a fluid to the fluid cylinder can be closed and opened.

12. The mold clamping apparatus according to claim 1, wherein the connection means is a turnbuckle, one end of which is connected to the peripheral portion of the mold mounting platen and the other end of which is connected to the peripheral portion of the mold clamping force transmitting member, and the turnbuckle is constructed so as to permit disengagement from connection to the peripheral portion of the mold mounting platen or connection to the peripheral portion of the mold clamping force transmitting member.

13. A method of mold clamping adjustment of a mold clamping apparatus for an injection molding machine,
said mold clamping apparatus comprises a mold clamping force transmitting member which transmits a mold clamping force to a middle part of a mold mounting platen, and a peripheral portion of the mold mounting platen and a peripheral portion of the mold clamping force transmitting member are spaced from each other,
the mold clamping apparatus further comprises;
a connection member in a spaced area between the peripheral portion of the mold mounting platen and the peripheral portion of the mold clamping force transmitting member in a manner such that it can be changed over from connected state to non-connected state or from non-connected state to connected state, and the connection member has a portion which abuts against, or connects to, the peripheral portion of the mold mounting platen, on one side thereof, and a portion which abuts against, or connects to, the peripheral portion of the mold clamping force transmitting member, on the other side thereof; and
connected state changeover means that carries out changeover between a state where the mold clamping force transmitting member and the mold mounting platen are connected to each other via the connection member and a state where the mold clamping force transmitting member is not connected to the mold mounting platen with the interposing of the connection member cancelled;
the method of mold clamping adjustment including the steps of:
mounting a mold to a fixed platen and a movable platen;
carrying out molding, with the connection member brought into either of a connected state or a non-connected state;
measuring the size and shape of a molded article obtained by the molding;
carrying out mass-production molding without changing over the connection/non-connection of the connection member when the size and shape of the measured molded article fall in prescribed ranges;
carrying out molding again by changing over the connection/non-connection of the connection member when the size and shape of the measured molded article go out of the prescribed ranges;
measuring the size and shape of a molded article obtained by the molding carried out again; and
carrying out mass-production molding following the molding performed again without changing over the connection/non-connection of the connection member when the size and shape of the measured molded article fall in prescribed ranges.

14. A method of mold clamping adjustment of a mold clamping apparatus for an injection molding machine,
said mold clamping apparatus comprises a mold clamping force transmitting member which transmits a mold clamping force to a middle part of a mold mounting platen, and a peripheral portion of the mold mounting platen and a peripheral portion of the mold clamping force transmitting member are spaced from each other,
the mold clamping apparatus further comprises;
a connection member in a spaced area between the peripheral portion of the mold mounting platen and the peripheral portion of the mold clamping force transmitting member in a manner such that it can be changed over from connected state to non-connected state or from non-connected state to connected state, and the connection member has a portion which abuts against, or connects to, the peripheral portion of the mold mounting platen, on one side thereof, and a portion which abuts against, or connects to, the peripheral portion of the mold clamping force transmitting member, on the other side thereof;
connected state changeover means that carries out changeover between a state where the mold clamping force transmitting member and the mold mounting platen are connected to each other via the connection member and a state where the mold clamping force transmitting member is not connected to the mold mounting platen with the interposing of the connection member cancelled;
applied connecting force adjusting means that adjusts an abutting force or a connecting force applied to between the mold mounting platen and the mold clamping force transmitting member by interposing the connection member; wherein
the connection member comprises connected state maintaining means for maintaining a state of abutment or connection between the mold mounting platen and the mold clamping force transmitting member;
the method of mold clamping adjustment including the steps of:
mounting a mold to a fixed platen and a movable platen;
carrying out injection molding by use of the mold;
measuring the size and shape of a molded article obtained by the injection molding;
carrying out mass-production molding when the size and shape of the measured molded article fall in prescribed ranges;
changing over a connected/non-connected state by use of the connected state changeover means according to differences between the size and shape of the molded article and target values thereof, or adjusting an abutting force or a connecting force applied to between the mold mounting platen and the mold clamping force transmitting member by use of the applied connecting force adjusting means when the size or shape of the measured molded particle goes out of a prescribed range; and
carrying out injection molding again, with the condition of abutment or connection between the mold mounting platen and the mold clamping force transmitting member maintained by use of the connected state maintaining means.
